# EUROPÄISCHE PATENTSCHRIFT

(11) **EP 0 361 048 B1**
(45) Veröffentlichungstag und Bekanntmachung des Hinweises auf die Patenterteilung: **26.05.1993**
(21) Anmeldenummer: 89114910.6
(22) Anmeldetag: 11.08.1989
(51) Int. Cl.: C08F 8/32, C08F 299/00

(54) **Härtbare Zusammensetzung auf Basis eines Michael-Additionsproduktes, Verfahren zu seiner Herstellung sowie seine Verwendung**
Curable composition containing a Michael addition product, its preparation and its use
Compositions durcissables à base d'un produit d'addition de "Michael", leur préparation et leur utilisation

(30) Priorität: 28.09.1988 DE 3832958
(43) Veröffentlichungstag der Anmeldung: 04.04.1990
(73) Patentinhaber: BASF Lacke + Farben AG, 48165 Münster-Hiltrup (DE)
(72) Erfinder: Jung, Werner Alfons, Dr., D-4715 Ascheberg (DE); Hoffmann, Peter, Dr., D-4400 Münster (DE)
(74) Vertreter: Münch, Volker, Dr.

(56) Entgegenhaltungen:
- EP-A- 0 199 087
- EP-A- 0 287 842
- DE-A- 2 805 265
- US-A- 4 408 018

## Beschreibung

Die Erfindung betrifft eine härtbare Zusammensetzung, enthaltend
A) Verbindungen, die mindestens zwei aktivierte Doppelbindungen (I) auf der Basis α,β-ungesättigter Carbonylverbindungen, α,β-ungesättigter Carbonsäureester oder α,β-ungesättigter Nitrilgruppen enthalten und als Michael-Akzeptor dienen können,
B) Verbindungen, die entweder mindestens eine primäre Aminogruppe (II), welche mit einem Aldehyd oder Keton mit nicht mehr als 10-C-Atomen blockiert ist oder mindestens 2 Gruppen, die zu NH-Gruppen hydrolysierbar sind, enthalten und als Michael-Donator dienen können und
C) übliche Zusatzstoffe, ggf. Katalysatoren, ggf. Pigmente und organische Lösungsmittel.

Gegenstand der vorliegenden Erfindung sind auch Verfahren zur Herstellung dieser Zusammensetzungen sowie deren Verwendung.
Aus der EP 160 824 sind Zusammensetzungen bekannt, die erhalten werden durch Umsetzung von Verbindungen mit mindestens zwei aktivierten Doppelbindungen (I) mit Verbindungen, die aktive Wasserstoffatome enthalten. Diese Zusammensetzungen reagieren unter dem Einfluß von Basen zu einem Michael-Additionsprodukt. Die Michael-Akzeptor-Komponente kann beispielsweise abgeleitet sein von Hydroxylgruppen enthaltenden Acrylatharzen, Epoxidharzen, oligomeren Polyolen oder oligomeren Polyaminen. Die Michael-Donator-Komponente kann beispielsweise abgeleitet sein von Polyolen, Polyaminen oder Polymercaptanen. Die in der EP 160 824 beschriebenen Bindemittel können als Zweikomponenten-Systeme für Überzüge verwendet werden. Sie härten unter Katalyse von Basen bei Raumtemperatur und bei erhöhten Temperaturen leicht aus. Die Vorteile der beschriebenen Systeme bestehen darin, daß sie zur Härtung keine freien Isocyanate benötigen. Nachteilig sind die bekannten Systeme jedoch in bezug auf Lösemittelbeständigkeit, Chemikalienfestigkeit und Elastizität der aus ihnen erhaltenen Überzüge.

Aus der EP 230 296 sind Zusammensetzungen bekannt, die erhalten werden durch Umsetzung von Verbindungen mit mindestens zwei aktivierten Doppelbindungen mit Verbindungen, die mindestens eine primäre Aminogruppe enthalten, die mit einem Aldehyd oder Keton blockiert sind. Diese Zusammensetzungen reagieren unter dem Einfluß von Luftfeuchtigkeit bei unterschiedlichen Temperaturen zu einem Michael-Additionsprodukt. Diese Zusammensetzungen sind jedoch in bezug auf Lösemittelbeständigkeit und Chemikalienfestigkeit der aus ihnen hergestellten Überzüge verbesserungsbedürftig. Ein weiterer Nachteil dieser Zusammensetzungen ist der durch die hohe Viskosität der Bindemittellösungen verursachte hohe Lösungsmittelanteil der Überzugszusammensetzungen, da er zu einer hohen Lösemittelbelastung der Umwelt beim Trocknen der Lackfilme führt.

Auch aus der EP-B-40 288 sind feuchtigkeitshärtende Zusammensetzungen bekannt, die Verbindungen mit mindestens zwei aktivierten Doppelbindungen und Verbindungen mit mindestens einer primären Aminogruppe enthalten, wobei die Aminogruppe mit einem Aldehyd oder Keton blockiert ist. Als aminogruppenhaltige Verbindungen werden Vinylpolymere eingesetzt, die sowohl verzweigte als auch lineare Kettenverknüpfungen aufweisen können. In der EP-B-40 288 ist aber weder die Zusammensetzung der verzweigten Vinylharze angegeben noch angeführt, daß das jeweils eingesetzte Vinylharz Einfluß auf die Lösemittelbeständigkeit, Chemikalienfestigkeit und Elastizität der resultierenden Beschichtung hat.
Schließlich sind auch aus der US-PS 4,058,657 Zusammensetzungen auf der Basis von aminogruppenhaltigen Verbindungen und Verbindungen mit aktivierten Doppelbindungen bekannt. Sowohl die aminogruppenhaltigen Verbindungen als auch die Verbindungen mit aktivierten Doppelbindungen können auf einem Vinylharz basieren, das als Monomereinheiten neben Monoolefinen mit 2 bis 14 C-Atomen, Dienen mit 4 bis 10 C-Atomen, Acrylsäure und Alkylacrylaten auch Divinylaromaten und Diacrylate enthält. Diese Zusammensetzungen werden als Dichtungsmassen eingesetzt und sind daher im ausgehärteten Zustand sehr weich. Als Beschichtungszusammensetzungen sind sie daher und auch wegen der nur sehr langsamen Aushärtung nicht geeignet.

In der ZA-A-8802144 sind härtbare Zusammensetzungen beschrieben, die Verbindungen A) mit mindestens zwei aktivierten Doppelbindungen und Verbindungen B) mit aktiven Wasserstoffatomen enthalten. Diese Zusammensetzungen reagieren unter dem Einfluß von Basen zu einem Michael-Additionsprodukt. Mindestens eine der Verbindungen A) und B) basiert auf einem verzweigten, in organischen Lösungsmitteln löslichen Acrylatcopolymerisat P. Im Unterschied zur vorliegenden Anmeldung werden als Verbindung B) ausschließlich Carbonylverbindungen, ausgewählt aus der Gruppe Acetessigsäure, Cyanessigsäure, Malonsäure, Cyclopentanoncarbonsäure, Cyclohexanoncarbonsäure, die jeweiligen Alkylester sowie die Umsetzungsprodukte dieser Carbonylverbindungen mit hydroxyl- und glycidylgruppenhaltigen Acrylatcopolymerisaten eingesetzt. Aminogruppenhaltige Verbindungen B) sind nicht beschrieben.

Die EP-A-158 161 beschreibt bei niedrigen Temperaturen aushärtende Überzugszusammensetzungen auf Basis von hydroxylgruppenhaltigen, verzweigten Acrylatcopolymerisaten und Melamin-Formaldehydharzen oder Polyisocyanaten als Vernetzungsmittel. Bei der Folymerisation zur Herstellung des Acrylatcopolymerisats werden 3 bis 25 Gew.-% an Monomeren mit mindestens zwei polymerisierbaren, olefinisch ungesättigten Doppelbindungen eingesetzt. Die Überzugsmittel auf Basis der beschriebenen Systeme haben eine gute Benzinbeständigkeit und eine gute Beständigkeit gegenüber langfristiger Belastung durch Wasser oder Wasserdampf. Nachteilig wirken sich jedoch die als Vernetzer eingesetzten Melamin-Formaldehydharze oder Polyisocyanate aus toxikologischen Gründen aus.

Der Erfindung lag somit die Aufgabe zugrunde, Überzugszusammensetzungen zur Verfügung zu stellen, die bei niedrigen Temperaturen aushärten können, daher vorzugsweise in der Autoreparaturlackierung einsetzbar sind und die weitgehend isocyanatfrei sind. Insbesondere sollten diese Überzugszusammensetzungen zu Lackfilmen mit - in bezug auf die Systeme der EP 160 824 und EP 230 296 - verbesserter Lösemittelbeständigkeit und Chemikalienfestigkeit führen. Weiterhin sollten diese Überzugszusammensetzungen bei einer für die Verarbeitung günstigen Viskosität von 16 bis 20 s, gemessen im Auslaufbecher nach DIN 4 bei 23°C, einen möglichst hohen Festkörpergehalt aufweisen.

Überraschenderweise wird diese Aufgabe durch eine härtbare Überzugszusammensetzung gelöst, die
A) Verbindungen, die mindestens zwei aktivierte Doppelbindungen (I) auf der Basis α,β-ungesättigter Carbonylverbindungen, α,β-ungesättigter Carbonsäureester oder α,β-ungesättigter Nitrilgruppen enthalten und als Michael-Akzeptor dienen können,
B) Verbindungen, die entweder mindestens eine primäre Aminogruppe (II), welche mit einem Aldehyd oder Keton mit nicht mehr als 10-C-Atomen blockiert ist oder mindestens 2 Gruppen, die zu NH-Gruppen hydrolysierbar sind, enthalten und als Michael-Donator dienen können und
C) übliche Zusatzstoffe, ggf. Katalysatoren, ggf. Pigmente und organische Lösungsmittel
enthält und die dadurch gekennzeichnet ist, daß entweder die Komponente A) oder die Komponente B) oder die Komponenten A) und B) auf einem verzweigten löslichen Acrylatcopolymerisat P basieren, welches erhältlich ist durch Copolymerisation von
a) 5 bis 30 Gew.-% Monomeren mit mindestens zwei ethylenisch ungesättigten polymerisierbaren Doppelbindungen,
b) 5 bis 60 Gew.-% Monomeren mit einer funktionellen Gruppe und
c) 5 bis 90 Gew.-% weiteren ethylenisch ungesättigten Monomeren,
wobei die Summe von a, b und c 100 Gew.-% beträgt.

Bei den Verbindungen A handelt es sich um Verbindungen, die aktivierte olefinisch ungesättigte Gruppen enthalten und als Michael-Akzeptor dienen können. Die Komponente B sind Verbindungen, die entweder mindestens eine primäre - mit Ketonen oder Aldehyden blockierte - Aminogruppe oder mindestens 2 Gruppen, die zu NH-Gruppen hydrolysierbar sind, enthalten und als Michael-Donator dienen können. Erfindungsgemäß soll mindestens eine der Komponenten A und B auf dem verzweigten löslichen Acrylatcopolymerisat P basieren, d. h. aus diesem erhältlich sein. Erfindungsgemäß kann daher die Komponente A erhältlich sein durch Umsetzung des verzweigten löslichen Acrylatcopolymerisats P mit einer Verbindung (1), die mindestens eine aktivierte Doppelbindung (I) enthält. Es ist auch möglich, daß die Komponente B erhältlich ist durch Umsetzung des verzweigten löslichen Acrylatcopolymerisats P mit einer Verbindung (2), die außer einer mit dem Acrylatcopolymerisat P reaktionsfähigen Gruppe mindestens eine primäre Aminogruppe, welche mit einem Keton oder Aldehyd mit nicht mehr als 10 C-Atomen blockiert ist, oder mindestens 2 Gruppen, die zu NH-Gruppen hydrolysierbar sind, enthält.

Das lösliche verzweigte Acrylatcopolymeridat P mit einem zahlenmittleren Molekulargewicht von 1500 bis 5000 (Gewichtsmittel 6000 bis 100 000) wird also erfindungsgemäß als Vorstufe für die Verbindungen A und/oder B eingesetzt. Das verzweigte Acrylatcopolymerisat ist erhältlich durch Copolymerisation von 5 bis 30 Gew.-%, bezogen auf das Gesamtgewicht der Monomeren, Monomeren mit mindestens zwei ethylenisch ungesättigten Doppelbindungen.

Als Komponente a können vorteilhaft Verbindungen der allgemeinen Formel 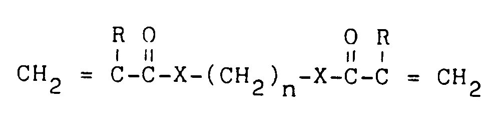
mit
- R =: H oder CH₃
- X =: 0, NR′, S mit R′ = H, Alkyl, Aryl
- n =: 2 bis 8
verwendet werden.

Beispiele für derartige Verbindungen sind Hexandioldiacrylat, Hexandioldimethacrylat, Glykoldiacrylat, Glykoldimethacrylat, Butandioldiacrylat, Butandioldimethacrylat, Trimethylolpropantriacrylat und Trimethylolpropantrimethacrylat. Weiterhin sind auch Divinylverbindungen, wie z.B. Divinylbenzol, geeignet als Komponente a. Selbstverständlich können auch Mischungen mehrfach funktioneller Monomerer verwendet werden.

Die Komponente a kann auch ein Umsetzungsprodukt aus einer Carbonsäure mit einer polymerisierbaren, olefinisch ungesättigten Doppelbindung und Glycidylacrylat und/oder Glycidylmethacrylat sein. Die Komponente a kann weiterhin eine mit einem ungesättigten, eine polymerisierbare Doppelbindung enthaltenden Alkohol veresterte Polycarbonsäure oder ungesättigte Monocarbonsäure sein.

Vorteilhafterweise werden als Komponente a Umsetzungsprodukte eines Polyisocyanats mit ungesättigten, polymerisierbaren Doppelbindungen enthaltenden Alkoholen oder Aminen eingesetzt. Als Beispiel hierfür ist das Reaktionsprodukt aus einem Mol Hexamethylendiisocyanat und zwei Molen Allylalkohol zu nennen.

Eine weitere vorteilhafte Komponente a ist ein Diester von Polyethylenglykol und/oder Polypropylenglykol mit einem mittleren Molekulargewicht von weniger als 1500, vorzugsweise von weniger als 1000, und Acrylsäure und/oder Methacrylsäure.

Als Komponente b werden Monomere mit einer funktionellen Gruppe verwendet, wobei sich die Auswahl dieser funktionellen Gruppe richtet nach Art der Verbindungen (1) und (2); durch Reaktion der löslichen verzweigten Acrylatcopolymerisate mit der Verbindung (1) oder (2) werden die Verbindungen A bzw. B erhalten. Auf die erfindungsgemäß einsetzbaren Monomeren b sei an späterer Stelle eingegangen.

Die weiteren polymerisierbaren Monomeren der Komponente c können vorteilhafterweise ausgewählt sein aus der Gruppe Styrol, Vinyltoluol, Alkylester der Acrylsäure und der Methacrylsäure, Alkoxiethylacrylate und Aryloxiethylacrylate und der entsprechenden Methacrylate, Ester der Malein-, Croton-, Isocroton-, Vinylessig- und Fumarsäure. Als weitere Beispiele seien genannt Methylacrylat, Ethylacrylat, Propylacrylat, Butylacrylat, Isopropylacrylat, Isobutylacrylat, Pentylacrylat, Isoamylacrylat, Hexylacrylat, 2-Ethylhexylacrylat, Octylacrylat, 3,5,5-Trimethylhexylacrylat, Decylacrylat, Dodecylacrylat, Hexadecylacrylat, Octadecylacrylat, Octadecenylacrylat, Pentylmethacrylat, Isoamylmethacrylat, Hexylmethacrylat, 2-Ethylhexylmethacrylat, Octylmethacrylat, 3,5,5-Trimethylhexylmethacrylat, Decylmethacrylat, Dodecylmethacrylat, Hexadecylmethacrylat, Octadecylmethacrylat, Butoxiethylacrylat, Butoxiethylmethacrylat, Methylmethacrylat, Ethylmethacrylat, Propylmethacrylat, Isopropylmethacrylat, Butylmethacrylat, Isobutylmethacrylat, Cyclohexylacrylat, Cyclohexylmethacrylat, Acrylnitril, Methacrylnitril, Vinylacetat, Vinylchlorid, Phenoxiethylmethacrylat und Phenoxiethylacrylat. Weitere Monomere können eingesetzt werden, sofern sie nicht zu unerwünschten Eigenschaften des Copolymerisats führen. Die Auswahl der Komponente c richtet sich weitgehend nach den gewünschten Eigenschaften des Acrylatcopolymerisats in bezug auf Elastizität, Härte, Verträglichkeit und Polarität. Diese Eigenschaften lassen sich zum Teil mit Hilfe der bekannten Glasübergangstemperaturen der Monomeren steuern.

Die Komponente b des Acrylatcopolymerisats kann vorteilhafterweise ein hydroxylgruppenhaltiges ethylenisch ungesättigtes Monomer sein. Beispiele hierfür sind Hydroxyalkylester der Acrylsäure und/oder Methacrylsäure mit einer primären Hydroxylgruppe. Die Komponente b kann auch zumindest teilweise ein Umsetzungsprodukt aus einem Mol Hydroxyethylacrylat und/oder Hydroxyethylmethacrylat und durchschnittlich zwei Mol ε-Caprolacton sein. Als Hydroxylgruppen enthaltende Monomere können aber auch hydroxylgruppenhaltige Ester der Acrylsäure und/oder Methacrylsäure mit einer sekundären Hydroxylgruppe eingesetzt werden. Vorteilhafterweise sind dies Umsetzungsprodukte aus Acrylsäure und/oder Methacrylsäure mit dem Glycidylester einer Carbonsäure mit einem tertiären α -Kohlenstoffatom. Beispiele für hydroxylgruppenhaltige ethylenisch ungesättigte Monomere sind Hydroxyethylacrylat, Hydroxypropylacrylat, Hydroxybutylacrylat, Hydroxyamylacrylat, Hydroxyhexylacrylat, Hydroxyoctylacrylat und die entsprechenden Methacrylate. Beispiele für OH-Monomere mit einer sekundären OH-Gruppe sind 2-Hydroxypropylacrylat, 2-Hydroxybutylacrylat, 3-Hydroxybutylacrylat und die entsprechenden Methacrylate.

Vorteilhaft sind erfindungsgemäße Zusammensetzungen, bei denen die Komponente A auf einem löslichen vernetzten Acrylatcopolymerisat basiert, wobei die Komponente b des Acrylatcopolymerisats ein hydroxylgruppenhaltiges Monomer ist, und die Verbindung (1) ein Monoester α,β-ungesättigter Carbonsäuren ist. In diesem Fall wird das verzweigte, Hydroxylgruppen enthaltende Copolymerisat nach der Polymerisation mit Monoestern α,β-ungesättigter Carbonsäuren in einer Umesterungsreaktion umgesetzt, so daß ein verzweigtes Polyacrylat mit freien olefinisch ungesättigten Doppelbindungen erhalten wird. Die erhaltene Verbindung A kann dann mit den Verbindungen B zu einem Michael-Additionsprodukt kombiniert werden. Vorteilhafterweise kommen in diesem Fall als Verbindung (1) Ester von α,β-ungesättigten Carbonsäuren in Frage, deren Estergruppen nicht mehr als 4 bis 6 Kohlenstoffatome haben, wie z.B. Methylacrylat, Ethylacrylat, Propylacrylat, Butylacrylat, Isopropylacrylat, Isobutylacrylat, Pentylacrylat, die entsprechenden Methacrylate sowie die entsprechenden Ester der Fumarsäure, Maleinsäure, Crotonsäure, Dimethylacrylsäure. Die Verbindungen (1) werden in bekannten Umesterungsreaktionen mit den OH-Gruppen des verzweigten Acrylatcopolymerisats P umgesetzt.

Im folgenden werden weitere Herstellungsmethoden für die Komponente A beschrieben:
Vorteilhafterweise basiert die Komponente A auf einem löslichen vorvernetzten Acrylatcopolymerisat P, dessen Komponente b ein Hydroxylgruppen enthaltendes Monomer ist, und wobei das hydroxylgruppenhaltige Acrylatcopolymerisat mit einer α,β-ungesättigten Carbonsäure (Verbindung (1)) umgesetzt wird. Die Komponente A wird in diesem Fall durch Veresterung eines hydroxylgruppenhaltigen verzweigten Acrylatcopolymerisats mit einer ungesättigten Carbonsäure erhalten.

Weiterhin kann die Komponente A vorteilhafterweise hergestellt werden durch Umsetzung des zuvor beschriebenen Hydroxylgruppen enthaltenden Acrylatcopolymerisats P mit einer Verbindung, die außer der Gruppe (I) eine Isocyanatgruppen enthält. Die Reaktion zwischen dieser Verbindung (1) und dem verzweigten Acrylatcopolymerisat erfolgt in diesem Fall unter Ausbildung einer Urethanbindung. Die Verbindung (1), die neben der Gruppe (I) eine Isocyanatfunktion enthält, ist vorteilhafterweise ein Isocyanatoalkylester einer ungesättigten Carbonsäure der allgemeinen Formel 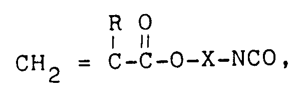
wobei
- R =: H, CH₃, C₂H₅
und
- X =: (CH₂)ₙ mit n = 1-12
bedeuten; sie kann aber auch m-Isopropenyl-α,α-dimethylbenzylisocyanat sein oder ausgewählt sein aus der Gruppe der Umsetzungsprodukte von Diisocyanaten mit OH-, NH-, SH- oder COOH-funktionellen Derivaten der Acrylsäure, Methacrylsäure, Fumarsäure, Maleinsäure, Crotonsäure und Dimethylacrylsäure.

Vorteilhafterweise wird zur Herstellung der Komponente A das verzweigte Hydroxylgruppen enthaltende Acrylatcopolymerisat mit einer Verbindung (1) umgesetzt, die ein Alkoxymethylgruppen enthaltendes Amid einer α,β-ungesättigten Carbonsäure ist oder der allgmeinen Formel 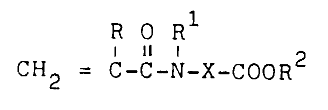
entspricht,
mit
- R =: H, CH₃
- R¹ =: H, ALkyl, Aryl
- R² =: Alkyl

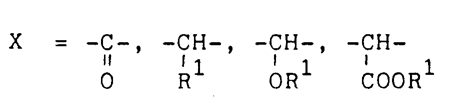

Beispiele für solche Verbindungen sind Methoxymethylacrylamid, Methoxymethylmethacrylamid, Butoxymethylacrylamid, Butoxymethylmethacrylamid, Isobutoxymethylacrylamid, Isobutoxymethylmethacrylamid, analoge Amide der Fumarsäure, Crotonsäure und der Dimethylacrylsäure, Glykolsäurederivate, wie Methylacrylamidoglykolatmethylether, Butylacrylamidoglykolatbutylether, Methylacrylamidoglykolat und Butylacrylamidoglykolat.

Die Komponente A, die auf einem verzweigten löslichen Acrylatcopolymerisat basiert und mindestens zwei aktivierte Doppelbindungen enthält, kann auch hergestellt werden durch Umsetzung eines Epoxidgruppen enthaltenden Acrylatcopolymerisats und einer Verbindung (1), die eine Carboxyl- oder Aminogruppe enthält. In diesem Fall wird als Monomer b zur Herstellung des Acrylatcopolymerisats P ein Epoxidgruppen enthaltendes Monomer, wie z.B. Glycidylester ungesättigter Carbonsäuren oder Glycidylether von ungesättigten Verbindungen eingesetzt. Als Beispiele für die Komponente b seien genannt: Glycidylacrylat, Glycidylmethacrylat, Glycidylester der Malein- und Fumarsäure, Glycidylvinylphthalat, Glycidylallylphthalat, Glycidylallylmalonat. Die Epoxidgruppen des Acrylatcopolymerisats werden dann mit den Carboxyl- oder Aminogruppen der Verbindung (1) umgesetzt. Die Verbindung (1) ist vorteilhafterweise ausgewählt aus der Gruppe Acrylsäure, Methacrylsäure, Crotonsäure, Dimethylacrylsäure, Fumarsäuremonomethylester, Umsetzungsprodukte aus Carbonsäureanhydriden und Hydroxyalkylestern α,β-ungesättigter Säuren, wie Addukte aus Hexahydrophthalsäureanhydrid, Phthalsäureanhydrid, Tetrahydrophthalsäureanhydrid oder Maleinsäureanhydrid und Hydroxyethyl(meth)acrylat, Hydroxypropyl(meth)acrylat, Hydroxybutyl(meth)acrylat. Die Verbindung (1) kann weiterhin t-Butylaminoethyl(meth)acrylat, Bisacrylamidoessigsäure oder Bis(acrylamidoethyl)amin sein. Besonders bevorzugt werden Verbindungen mit mehreren aktivierten Doppelbindungen eingesetzt, wie z.B. Bisacrylamidoessigsäure.

Das verzweigte lösliche Acrylatcopolymerisat P kann als funktionelles Monomer b Monomere mit Esterfunktionen enthalten. Vorteilhafterweise sollte der Veresterungsalkohol nicht mehr als 6 Kohlenstoffatome enthalten. Zur Herstellung der Komponente A wird das auf diese Weise hergestellte Acrylatcopolymerisat mit einer Verbindung (1) umgesetzt, die neben der Gruppe (I) eine OH-, NH- oder SH-Gruppe aufweist. Als Komponente b kommen Alkylester von Acrylsäure, Methacrylsäure, Crotonsäure, Malein- und Fumarsäure in Frage, wie z.B. die entsprechenden Methyl-, Ethyl-, Propyl-, Isopropyl-, Butyl-, Isobutyl und Pentylester. Längerkettige Alkoholreste in der Estergruppe sind weniger günstig, da ihre Umesterung und ihr Abdestillieren nach der Umesterung zu hohe Temperaturen erfordert. Außerdem kommen Aminoalkylester der genannten α,β-ungesättigten Carbonsäuren in Frage. Die Komponente A wird dann durch Umesterungs- oder Umamidierungsreaktionen erhalten. Diese Reaktionen sind dem Fachmann bekannt und bedürfen keiner weiteren Erläuterung.

Es können auch Isocyanatgruppen enthaltende verzweigte Acrylatcopolymerisate zur Herstellung der Komponente A eingesetzt werden. In diesem Fall werden als Monomer b NCO-Gruppen enthaltende Monomere eingesetzt. Das erhaltene Isocyanatgruppen aufweisende Acrylatcopolymerisat wird dann mit Verbindungen (1) umgesetzt, die neben der Gruppe (I) OH-, NH-, SH- oder COOH-Gruppen enthalten. In diesem Fall können die Monomeren b ausgewählt sein aus der Gruppe vinylischer Isocyanate, wie z.B. Vinylisocyanat und m-Isopropenyl-α,α-dimethylenbenzylisocyanat, Isocyanatoalkylester α,β-ungesättigter Carbonsäuren der allgemeinen Formel 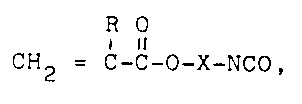
wobei
- R =: H, CH₃, C₂H₅
und
- X =: (CH₂)ₙ mit n = 1-12
bedeuten.
Als Komponente b können auch Addukte beispielsweise von Isophorondiisocyanat an Hydroxyalkyl(meth)acrylate, wie z.B. Hydroxyethylmethacrylat, eingesetzt werden. Es ist vorteilhaft, für die Addition solche Verbindungen auszuwählen, die neben der OH-, NH-, SH- oder COOH-Gruppe zwei oder mehr Strukturelemente (I) enthalten. Auf diese Weise werden mit einem Additionsschritt zwei oder mehr Doppelbindungen vom Typ (I) eingeführt. Dies ist insofern günstig, da bei der Addition von Hydroxylgruppen an Isocyanatgruppen Urethan- bzw. Harnstoffgruppen gebildet werden, die im allgemeinen die Viskosität der Bindemittel stark erhöhen, was nicht immer wünschenswert ist. Als Beispiel hierfür seien aufgeführt die Umsetzungsprodukte aus Acrylsäure oder Methacrylsäure oder einer anderen α,β-ethylenisch ungesättigten Carbonsäure und Glycidylacrylat bzw. Glycidylmethacrylat. Durch diese Umsetzung entsteht eine freie Hydroxylgruppe, die dann an die NCO-Gruppen des Acrylatcopolymerisats addiert wird.

Vorteilhafterweise kann die Monomerkomponente b zur Herstellung des Acrylatcopolymers ein Alkoxymethylgruppen enthaltendes Amid einer α,β-ungesättigten Carbonsäure oder eine Verbindung der allgemeinen Formel 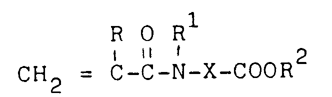
sein,
mit
- R =: H, CH₃
- R¹ =: H, Alkyl, Aryl
- R² =: Alkyl

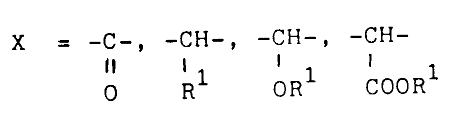

In diesem Fall werden als Verbindung (1) Verbindungen eingesetzt, die außer der Gruppe (I) OH-, NH- oder SH-Gruppen enthalten. Beispiele für die Monomeren b sind N-Alkoximethyl(meth)acrylamide, wie Methoximethylacrylamid, Methoximethylmethacrylamid, Isobutoxiacrylamid, Isobutoximethacrylamid und Isobutoximethylmethacrylamid. Außerdem sind geeignet die Alkoxi(meth)acrylamidoglykolatalkylether.

Bei den Verbindungen B handelt es sich um Verbindungen, die entweder mindestens eine primäre Aminogruppe, welche mit einem Aldehyd oder Keton mit nicht mehr als 10 Atomen blockiert ist oder mindestens 2 Gruppen, die zu NH-Gruppen hydrolysierbar sind, enthalten und die als Michael-Donator dienen können.
Beispiele für geeignete Verbindungen, die in aldiminisierter bzw. ketiminisierter Form eingesetzt werden, sind aliphatische und/oder cycloaliphatische Amine mit mindestens einer, bevorzugt zwei bis vier, primären Aminogruppen und 2 bis 24 C-Atomen. Sie weisen bevorzugt zahlenmittlere Molekulargewichte unterhalb von 700 auf. Bevorzugt weisen sie außerdem noch 0 bis 4 sekundäre Aminogruppen auf. Weiterhin bevorzugt sind auch Alkanolamine.
Beispiele für geeignete Amine sind Ethylendiamin, Tri-, Tetra-, Penta-, Hexa-, Hepta-, Nona-, Deca- und Dodecamethylendiamin, 2,2,4- bzw. 2,4,4-Trimethylhexamethylendiamin, Propylendiamin, 1,3- bzw. 1,4-Butylendiamin, Isophorondiamin, 1,2- und 1,4-Diaminocyclohexan, 4,4′-Diaminodicyclohexylmethan, Bis-(3-methyl-4-aminocyclohexyl-)methan 2,2-Bis-(4-aminocyclohexyl-)propan, 4,7-Dioxadecan-1,10-diamin, 4,9-Dioxadodecan-1,12-diamin, 7-Methyl-4,10-dioxatridecan-1,13-diamin, Nitrilotris(ethanamin), Ethanolamin, Propanolamin, N-(2-Aminoethyl-)ethanol, Polyetherpolyamine, Bis-(3-aminopropyl)-methylamin, 3-Amino-1-methylaminopropan, 3-Amino-1-(cyclohexylamino-)propan, N-(2-hydroxyethyl)ethylendiamin, Tris-(2-aminoethyl-)amin sowie Polyamine der Formel H₂N-(R₂-NH)ₙ-R₁-NH₂. n ist eine ganze Zahl zwischen 1 und 6, bevorzugt 1 - 3, R₁ und R₂ sind gleiche oder verschiedene Alkylengruppen bzw. Cycloalkylengruppen bzw. Ethergruppen enthaltende Alkylengruppen mit 2 - 6, bevorzugt 2 - 4 C-Atomen. Beispiele für derartige Polyalkylenpolyamine sind Diethylentriamin, Triethylentetraamin, Tetraethylenpentamin, Dipropylentriamin, Tripropylentetramin, Tetrapropylenpentamin und Dibutylentriamin. Bevorzugt ist besonders Diethylentriamin.
Weiterhin als Komponente B geeignete Aminoverbindungen sind die in der EP 203 296 beschriebenen Umsetzungsprodukte eines Amins, das neben der iminisierten (d.h. primäre Aminogruppe, die mit einem Aldehyd oder Keton mit nicht mehr als 10 C-Atomen blockiert ist) primären Aminogruppe noch OH-, NH- oder SH-Gruppen enthält, mit einem Monoisocyanat, Monoepoxid oder einer monofunktionellen α,β-ungesättigten Carbonylverbindung. Für nähere Einzelheiten wird auf die EP 203 296 verwiesen. Bevorzugt werden zur Herstellung dieser Komponente cycloaliphatische Amine mit 5 bis 15 C-Atomen, wie z.B. Isophorondiamin, 4,4′-Dicyclohexylmethandiamin und 3,3′-Dimethyl-4,4′Dicyclohexylmethandiamin eingesetzt. Als Komponente B geeignet sind außerdem Umsetzungsprodukte von Alkanolaminen, Mercaptylaminen oder primären Aminen, die außerdem noch eine NH-Gruppe haben, mit Di- und Polyisocyanaten, Di- und Polyepoxiden und α,β-ungesättigten Carbonylverbindungen.

Als Di- oder Polyisocyanate sind beispielsweise geeignet: Aromatische Isocyanate, wie z.B. 2,4-, 2,6-Toluylendiisocyanat und deren Gemische, 4,4′-Diphenylmethandiisocyanat, m-Phenylen-, p-Phenylen-, 4,4-Diphenyl-, 1,5-Naphthalin-, 1,4-Naphthalin-, 4,4′-Toluidin-, Xylylendiisocyanat sowie substituierte aromatische Systeme wie z.B. Dianisidindiisocyanate, 4,4′-Diphenyletherdiisocyanate oder Chlorodiphenylendiisocyanate und höherfunktionelle aromatische Isocyanate, wie z.B. 1,3,5-Triisocyanatobenzol, 4,4′,4˝-Triisocyanattriphenylmethan, 2,4,6-Triisocyanatotoluol und 4,4′-Diphenyldimethylmethan-2,2′, 5,5′-tetraisocyant; cycloaliphatische Isocyanate, wie z.B. 1,3-Cyclopentan-, 1,4-Cyclohexan-, 1,2-Cyclohexan- und Isophorondiisocyanat; aliphatische Isocyanate, wie z.B. Trimethylen-, Tetramethylen-, Pentamethylen-, Hexamethylen-, Trimethylhexamethylen-1,6-diisocyanat und Tris-hexamethylen-triisocyanat.

Beispiele für geeignete α,β ungesättigte Carbonylverbindungen sind u.a. α,β-ungesättigte Dicarbonsäuren oder deren Ester, z.B. Malein- und Fumarsäure.
Für weitere Einzelheiten von als Komponente B geeigneten Aminaddukten wird auf die EP 203 296 verwiesen.

Wie bereits erwähnt, werden die oben genannten Amine in Form der iminisierten Verbindungen in den erfindungsgemäßen Zusammensetzungen eingesetzt, d.h. die primären Aminogruppen werden durch Umsetzung mit einem Aldehyd oder Keton mit nicht mehr als 10 C-Atome, vorzugsweise 3 - 8 C-Atome, blockiert. Bevorzugt werden Ketone eingesetzt. Beispiele für geeignete Aldehyde und Ketone sind Aceton, Methylethylketon, Diethylketon, Methylisopropylketon, Methylisobutylketon, Isobutyraldehyd, 2-Pentanon, Cyclohexanon, Ethylamylketon, Diisobutylketon, 3-Octanon und Decanon. Ganz besonders bevorzugt werden Methylisobutylketon und Ethylamylketon eingesetzt. Diese Blockierungsreaktion ist bekannt (vgl. EP 203 296) und braucht nicht näher beschrieben zu werden.

Selbstverständlich kann auch die Komponente B, die als Michael-Donator dient, auf dem in organischen Lösungsmitteln löslichen verzweigten Acrylatcopolymerisat basieren. Nachfolgend werden einige Herstellungsmethoden für die Komponente B, die aus einem Acrylatcopolymerisat mit einer funktionellen Gruppe und der Verbindung (2) erhalten wird, dargestellt.

Vorzugsweise enthält das lösliche verzweigte Acrylatcopolymerisat Hydroxylgruppen, die vorzugsweise durch Verwendung von Hydroxyalkylestern α,β-ungesättigter Carbonsäuren als Monomer b in das Acrylatcopolymerisat eingeführt werden. Diese hydroxylgruppenhaltigen Acrylatcopolymerisate werden mit Verbindungen (2) umgesetzt, die pro Molekül mindestens eine primäre, mit Aldehyden oder Ketonen mit nicht mehr als 10 C-Atomen blockierte Aminogruppe und durchschnittlich 0,8 bis 1,5, vorzugsweise 1, freie Isocyanatgruppe enthalten. Die Menge der Verbindung (2) wird dabei so gewählt, daß das entstehende Harz eine Aminzahl von 30 bis 200 mgKOH/g, bevorzugt 60 bis 150 mgKOH/g aufweist. Diese Umsetzung des hydroxylgruppenhaltigen Acrylatcopolymerisats mit den Verbindungen (2) erfolgt in einem isocyanatinerten Lösungsmittel bei Temperaturen von 10 bis 100°C, vorzugsweise 50 bis 80°C, ggf. in Anwesenheit von organischen Zinnverbindungen als Katalysatoren, bis zu einem NCO-Wert von praktisch Null.

Die Verbindungen (2) werden hergestellt durch Umsetzung von Diisocyanaten oder Polyisocyanaten mit einem stöchiometrischen Unterschuß eines oder mehrerer Polyamine mit mindestens einer primären Aminogruppe, die mit einem Aldehyd oder Keton mit nicht mehr als 10 C-Atomen blockiert ist sowie einer gegenüber Isocyanatgruppen reaktiven Gruppe. Beispiele für geeignete Amine sind die bereits weiter oben in dieser Beschreibung aufgeführten Alkanolamine mit mindestens 4 C-Atomen, Amine mit Mercaptangruppen sowie Polyamine, bevorzugt mit unterschiedlich reaktiven Aminogruppen. Bevorzugt werden die Alkanolamine eingesetzt. Die primäre Aminogruppe dieser Verbindungen wurde vor der Umsetzung mit den Isocyanaten mit Aldehyden oder Ketonen mit nicht mehr als 10 C-Atomen blockiert.
Beispiele für die zur Herstellung der Verbindung (2) geeigneten Di- und Polyisocyanate sind die bereits weiter oben in dieser Beschreibung aufgeführten Verbindungen. Vorzugsweise werden Diisocyanate mit unterschiedlich reaktiven Isocyanatgruppen, wie z.B. Isophorondiisocyanat eingesetzt.

Eine weitere Möglichkeit besteht darin, Isocyanatgruppen enthaltende verzweigte Acrylatcopolymerisate P zur Herstellung der Komponente B einzusetzen. In diesem Fall werden als Monomer b NCO-Gruppen enthaltende Monomere, wie z.B. die weiter oben in dieser Beschreibung aufgeführten Verbindungen, eingesetzt. Dieses Isocyanatgruppen enthaltende Acrylatcopolymerisat P wird dann mit Verbindungen (2) umgesetzt, die neben der iminisierten primären Aminogruppen OH-, NH- oder SH-Gruppen enthalten. Beispiele für derartige Verbindungen sind weiter oben in dieser Beschreibung aufgeführt.

Es besteht auch die Möglichkeit, Glycidylgruppen enthaltende Acrylatcopolymerisate P, die durch Verwendung von Monomeren b mit Glycidylgruppen - wie weiter oben in dieser Beschreibung erläutert - herstellbar sind, mit Verbindungen (2) umzusetzen, die neben der iminisierten Aminogruppe (II) eine NH-Gruppe enthalten. Beispiele für geeignete Verbindungen (2) sind weiter oben in dieser Beschreibung aufgeführt.

Selbstverständlich können auch Acrylatcopolymerisate P, die unter Verwendung von Carboxylgruppen enthaltenden Monomeren b hergestellt wurden, mit Verbindungen (2) umgesetzt werden, die ein Umsetzungsprodukt eines Polyepoxids mit n Mol Epoxidgruppen und (n-1) Mol einer Verbindung (3), die neben der iminisierten Aminogruppe (II) noch NH-Gruppen aufweist, ist. Beispiele für geeignete Verbindungen (3) sind weiter oben in dieser Beschreibung aufgeführt. Beispiele für geeignete Epoxid-Aminaddukte (2) sind auch in der EP 203 296 aufgeführt.
Schließlich besteht auch die Möglichkeit, als Komponente B) Verbindungen einzusetzen, die mindestens 2 Gruppen aufweisen, die zu NH-Gruppen hydrolysierbar sind. Wegen näherer Einzelheiten wird auf die EP 160 824 verwiesen.

Die Erfindung betrifft auch ein Verfahren zur Herstellung einer härtbaren Zusammensetzung, die
A) Verbindungen, die mindestens zwei aktivierte Doppelbindungen (I) auf der Basis α,β-ungesättigter Carbonylverbindungen, α,β-ungesättigter Carbonsäureester oder α,β-ungesättigter Nitrilgruppen enthalten und als Michael-Akzeptor dienen können,
B) Verbindungen, die entweder mindestens eine primäre Aminogruppe (II), welche mit einem Aldehyd oder Keton mit nicht mehr als 10-C-Atomen blockiert ist oder mindestens 2 Gruppen, die zu NH-Gruppen hydrolysierbar sind, enthalten und als Michael-Donator dienen können
C) übliche Zusatzstoffe, ggf. Katalysatoren, ggf. Pigmente und organische Lösungsmittel,
enthält, dadurch gekennzeichnet, daß zunächst das lösliche verzweigte Acrylatcopolymerisat P hergestellt wird durch Copolymerisation von
a) 5 bis 30 Gew.-% Monomeren mit mindestens zwei ethylenisch ungesättigten polymerisierbaren Doppelbindungen,
b) 5 bis 60 Gew.-% Monomeren mit einer funktionellen Gruppe und
c) 5 bis 90 Gew.-% weiteren ethylenisch ungesättigten Monomeren,
wobei die Summe von a, b und c 100 Gew.-% beträgt, in einem organischen Lösungsmittel bei 70 bis 130°C, vorzugsweise bei 90 bis 120°C, unter Verwendung von mindestens 0,5 Gew.-%, vorzugsweise mindestens 2,5 Gew.-%, bezogen auf das Gesamtgewicht der Monomeren a, b und c, eines Polymerisationsreglers und unter Verwendung von Polymerisationsinitiatoren, wobei ein vorvernetzes, nicht geliertes Produkt erhalten wird, und anschließend
das lösliche verzweigte Acrylatcopolymerisat P mit einer Verbindung (1) umgesetzt wird, die neben einer mit P reaktionsfähigen Gruppen mindestens eine aktive Doppelbindung (I) enthält, wobei die Komponente A erhalten wird, und/oder
das verzweigte lösliche Acrylatcopolymerisat P mit einer Verbindung (2) umgesetzt wird, die außer einer mit P reaktionsfähigen Gruppe mindestens eine primäre Aminogruppe, welche mit einem Aldehyd oder Keton mit nicht mehr als 10 C-Atomen blockiert ist, enthält, wobei B erhalten wird,
und A oder B, bevorzugt A, in organischem Lösungsmittel ggf. mit Pigmenten und üblichen Zusatzstoffen durch Mischen und ggf. Dispergieren zu einer Überzugszusammensetzung verarbeitet werden und kurz vor der Anwendung zur Aushärtung die andere Komponente (B bzw. A), ggf. zusammen mit einem Katalysator zugefügt wird.

Bei der Herstellung des Acrylatcopolymeren P ist darauf zu achten, daß ein vorvernetztes, aber nicht geliertes Copolymerisat erhalten wird. Dies ist durch geeignete Polymerisationsbedingungen möglich. Durch die Verwendung von Monomeren mit mindestens zwei ethylenisch ungesättigten Gruppen wird eine Vorvernetzung des Acrylatcopolymerisats hervorgerufen, die aufgrund der speziellen Reaktionsbedingungen trotzdem nicht zu gelierten Produkten führt. Wichtig ist, daß die Polymerisation bei Temperaturen von 70 bis 130°C, vorzugsweise bei 90 bis 120°C, bei relativ niedrigem Polymerisationsfestkörper von etwa 40 bis 65 Gew.-% durchgeführt wird. Bei Verwendung von Divinylbenzol als Monomer a ist es allerdings auch möglich, die Polymerisation bei Temperaturen von bis zu 140°C durchzuführen. Als Polymerisationsregler werden vorzugsweise Mercaptogruppen enthaltende Verbindungen, vorzugsweise Mercaptoethanol, verwendet. Die Auswahl des Reglers richtet sich insbesondere nach der Art der Monomerkomponente b. Enthält die Monomerkomponente b Alkylestergruppen und soll anschließend mit Alkoholen oder Aminen umgeestert bzw. umamidiert werden, so ist es sinnvoll, wenig oder gar keine Mercaptoalkohole als Regler einzusetzen, da sonst bei der Umesterung bzw. Umamidierung die Gefahr einer vorzeitigen Gelierung besteht.

Handelt es sich bei der Monomerkomponente b um ein OH-Monomer und soll das erhaltene Hydroxylgruppen enthaltende Acrylatcopolymerisat mit einer Carboxylgruppen enthaltenden Verbindung in einer Veresterungsreaktion umgesetzt werden, so ist es sinnvoll, weniger oder gar keine Mercaptocarbonsäuren als Regler zu verwenden, da sonst eine Gelierungsgefahr besteht. Es sei an dieser Stelle erwähnt, daß z.B. 2-Mercaptopropionsäure in diesen Fällen trotzdem einsetzbar ist, da diese Verbindung eine Carboxylgruppe an einem sekundären gesättigten Kohlenstoffatom besitzt und somit weniger reaktiv ist als eine α,β-ungesättigte Carbonsäure.

Es muß immer eine Abstimmung zwischen den Monomeren b und der Auswahl des Reglers erfolgen, des weiteren können z.B. primäre Mercaptane und ethylenisch ungesättigte Monomere mit Isocyanatgruppen sowie Glycidylgruppen enthaltende ethylenisch ungesättigte Monomere und Mercaptocarbonsäuren als Regler nicht miteinander kombiniert werden.

Die Auswahl des Polymerisationsinitiators richtet sich nach dem Anteil der eingesetzten mehrfach ethylenisch ungesättigten Monomeren. Bei niedrigem Anteil kann man die für solche Temperaturen üblichen Initiatoren, wie z.B. Peroxyester, verwenden. Ist der Anteil der mehrfach ethylenisch ungesättigten Monomeren höher, werden vorzugsweise Initiatoren, wie z.B. Azoverbindungen, eingesetzt.

Bei den Reaktionen des funktionellen Acrylatcopolymerisats P mit den Verbindungen (1) und (2), die zur Bildung der Komponenten A bzw. B führen, handelt es sich in Abhängigkeit von der Art der funktionellen Gruppe des Acrylatcopolymerisats um dem Fachmann bekannte Reaktionen, wie z.B. Veresterungsreaktionen, Umesterungsreaktionen, Umamidierungsreaktionen, Additionsreaktionen unter Bildung von Urethanbindungen, Harnstoffbindungen, β-Hydroxyester-Gruppen.

Die erfindungsgemäßen härtbaren Zusammensetzungen enthalten außerdem übliche Zusatzstoffe sowie gegebenenfalls Pigmente und organische Lösungsmittel in üblichen Mengen.

Beispiele für übliche Zusatzstoffe sind Füllstoffe, Verlaufsmittel, Silikonöle, Weichmacher, wie Phosphorsäureester und Phthalsäureester, viskositätskontrollierende Zusätze, Mattierungsmittel, UV-Absorber und Lichtschutzmittel. Diese Stoffe werden bevorzugt in Mengen von 0,1 bis 20 Gew.-%, bezogen auf die Gesamtzusammensetzung, eingesetzt.

Beispiele für ggf. zugesetzte Pigmente sind Metallpigmente, wie z.B. Aluminiumplättchenpigmente und mit Metalloxiden beschichtete Glimmerplättchen (z.B. Mica) als Effektpigmente, die bevorzugt in Mengen von 0,1 bis 30 Gew.-%, bezogen auf die Gesamtzusammensetzung, eingesetzt werden. Es können auch ggf. Farbpigmente, bevorzugt in Mengen von 0,1 bis 60 Gew.-%, bezogen auf die Gesamtzusammensetzung, eingesetzt werden.

Die erfindungsgemäßen härtbaren Zusammensetzungen härten aus im Temperaturbereich von Raumtemperatur bis etwa 100°C, können aber auch bei höheren Temperaturen eingesetzt werden.

Durch die niedrigen Aushärtungstemperaturen sind sie insbesondere geeignet für die Autoreparaturlackierung.

Sie können allerdings auch als Klarlack, Füller oder Decklack sowie als Metallpigmente enthaltender Basislack oder als Klarlack einer Mehrschicht-Metallic-Lackierung verwendet werden.

Diese Beschichtungsmittel können durch Spritzen, Fluten, Tauchen, Walzen, Rakeln oder Streichen auf ein Substrat in Form eines Films aufgebracht werden, wobei der Film anschließend zu einem festhaftenden Überzug gehärtet wird.

Die aus den härtbaren Zusammensetzungen erhaltenen Überzüge weisen eine sehr gute Lösemittelbeständigkeit und Chemikalienfestigkeit auf.

Nachfolgend wird die Erfindung anhand von Ausführungsbeispielen näher erläutert. Alle Angaben über Teile und Prozentsätze sind Gewichtsangaben, falls nicht ausdrücklich etwas anderes festgestellt wird.

### Herstellung eines verzweigten Acrylatcopolymerisats P

In einem 4 Liter Edelstahlkessel werden vorgelegt und auf 110°C aufgeheizt:
677,3 Teile Xylol
In den Monomerentank werden eingewogen und gemischt:
120 Teile Hexandioldiacrylat
200 Teile Hydroxyethylmethacrylat
120 Teile Ethylhexylacrylat
80 Teile Cyclohexylacrylat
160 Teile tert.-Butylacrylat
120 Teile Styrol
30 Teile Mercaptoethanol
In den Initiatortank werden eingewogen und gemischt:
16 Teile 2,2′-Azobis(2-methylbutannitril)
169 Teile Xylol
Der Inhalt des Monomerentanks wird in 3 Stunden zudosiert, der Inhalt des Initiatortanks wird in 3,5 Stunden zudosiert. Der Initiatorzulauf wird 10 Minuten später gestartet als der Monomerenzulauf. Während der Polymerisation wird die Temperatur bei 110°C gehalten. Nach Beendigung der Zuläufe wird noch 3 Stunden nachpolymerisiert. Die so erhaltene Acrylatharzlösung hat eine Viskosität von 7,6 dPas (gemessen bei 23°C) und einen Festkörper von 49,6 % (60 min 130°C).

### Herstellung der Komponente A

Zu der oben beschriebenen Acrylatcopolymerisatlösung P werden nach dem Abkühlen auf etwa 60°C 477,5 Teile Ethylacrylat, 4,2 Teile Hydrochinon und 8,5 Teile Dibutylzinnoxid zugefügt. Die Lösung wird langsam auf 80°C erhitzt. Während der Reaktion wird ständig ein Luftstrom durch den Kessel geleitet. Nachdem die Lösung 6 h bei dieser Temperatur gehalten wurde, wird die Temperatur langsam unter Abdestillieren (über Kolonne) von Ethanol auf 120°C gesteigert. Anschließend wird unter Vakuum das überschüssige Ethylacrylat und etwas Lösungsmittel abdestilliert.
Die so erhaltene Acrylatharzlösung hat eine Viskosität von 3,4 dPas (gemessen bei 23°C) und einen Festkörper von 56 % (60 min, 130 °C).

### Herstellung der Ketiminkomponente B

In einem 2-Liter Glaskessel wird eine Lösung von 232 Teilen eines Ketimins aus Ethylamylketon (5-methyl-3-heptanon) und Diethylentriamin, gelöst in 84 Teilen Ethylamylketon vorgelegt. Zu dieser Lösung wird eine Lösung von 228 Teilen eines trimerisierten Isophorondiisocyanates in 45,6 Teilen Xylol und 45,6 Teilen 1-Methoxipropylacetat-2 innerhalb von 120 Minuten zugetropft. Die Reaktionstemperatur wird bei 35-40°C gehalten. Die Mischung wird weitere 3 h bei 35°C gehalten, bis die Infrarotspektroskopische Untersuchung der Reaktionsmischung kein freies Isocyanat mehr zeigt. Anschließend werden 13,0 Teile Methoxipropanol zugesetzt. Die so erhaltene Ketiminlösung hat einen Festkörper von 57 % (60 min, 130 °C)und eine Viskosität von 6,4 dPas (bei 23 °C).

### Herstellung und Prüfung eines Klarlacküberzuges:

25,89 Teile Acrylatharzlösung A und 7,74 Teile Ketiminkomponente B werden miteinander vermischt und mit Butylacetat auf eine Auslaufviskosität von 25 s (DIN 4, 23°C) eingestellt. Der Klarlack wird mit 200 µm Naßfilmstärke auf Glastafeln aufgerakelt und wie angegeben getrocknet:

### Probe 1

Nach 30-minütigem Einbrennen bei 100°C werden die beschichteten Glastafeln noch 24 h bei Raumtemperatur aufbewahrt und danach die mechanischen Eigenschaften der resultierenden Beschichtung geprüft:
Pendelhärte nach König: 175 s
Benzintest ^{a)}: 0/0

### Probe 2

Nach 30-minütigem Einbrennen bei 60°C werden die beschichteten Glastafeln noch 4 Tage bei Raumtemperatur aufbewahrt und danach die mechanischen Eigenschaften der resultierenden Beschichtung geprüft:
Pendelhärte nach König: 100 s
Benzintest^{a)}: 0/0
a: Mit handelsüblichem Superbenzin getränkte Filzplättchen (⌀ 5 cm) werden für 5 min abgedeckt auf dem Film belassen. Anschließend wird die Markierung (0 = keine Markierung; 3 = deutliche Markierung) und die Erweichung des Films (0 = keine Erweichung; 3 = deutliche Erweichung) beurteilt.

## Patentansprüche

1. Härtbare Zusammensetzung, enthaltend
A) Verbindungen, die mindestens zwei aktivierte Doppelbindungen (I) auf der Basis α,β-ungesättigter Carbonylverbindungen, α,β-ungesättigter Carbonsäureester oder α,β-ungesättigter Nitrilgruppen enthalten und als Michael-Akzeptor dienen können,
B) Verbindungen, die entweder mindestens eine primäre Aminogruppe (II), welche mit einem Aldehyd oder Keton mit nicht mehr als 10-C-Atomen blockiert ist oder mindestens 2 Gruppen, die zu NH-Gruppen hydrolysierbar sind, enthalten und als Michael-Donator dienen können und
C) übliche Zusatzstoffe, ggf. Katalysatoren, ggf. Pigmente und organische Lösungsmittel,
dadurch gekennzeichnet, daß entweder die Komponente A oder die Komponente B oder die Komponenten A und B auf einem verzweigten, in organischen Lösungsmitteln löslichen Acrylatcopolymerisat P basieren, welches erhältlich ist durch Copolymerisation von
a) 5 bis 30 Gew.-% Monomeren mit mindestens zwei ethylenisch ungesättigten polymerisierbaren Doppelbindungen,
b) 5 bis 60 Gew.-% Monomeren mit einer funktionellen Gruppe und
c) 5 bis 90 Gew.-% weiteren ethylenisch ungesättigten Monomeren,
wobei die Summe von a), b) und c) 100 Gew.-% beträgt.

2. Zusammensetzung nach Anspruch 1, dadurch gekennzeichnet, daß die Komponente A) erhältlich ist durch Umsetzung des verzweigten löslichen Acrylatcopolymerisats P mit einer Verbindung (1), die mindestens eine aktivierte Doppelbindung (I) enthält.

3. Zusammensetzung nach Anspruch 1, dadurch gekennzeichnet, daß die Komponente B) erhältlich ist durch Umsetzung des verzweigten löslichen Acrylatcopolymerisats P mit einer Verbindung (2), die außer einer mit dem Acrylatcopolymerisat reaktionsfähigen Gruppe mindestens eine primäre Aminogruppe (II) enthält, welche mit einem Aldehyd oder Keton mit nicht mehr als 10 C-Atomen blockiert ist.

4. Zusammensetzung nach Anspruch 2, dadurch gekennzeichnet, daß die Komponente b) des Acrylatcopolymerisats ein Hydroxylgruppen enthaltendes Monomer und die Verbindung (1) ein Monoester einer α,β-ungesättigten Carbonsäure ist.

5. Zusammensetzung nach Anspruch 2, dadurch gekennzeichnet, daß die Komponente b) des Acrylatcopolymerisats ein Hydroxylgruppen enthaltendes Monomer ist und die Verbindung (1) eine α,β-ungesättigte Carbonsäure ist.

6. Zusammensetzung nach Anspruch 2, dadurch gekennzeichnet, daß die Komponente b) des Acrylatcopolymerisats ein Hydroxylgruppen enthaltendes Monomer ist und die Verbindung (1) außer der Gruppe (I) eine Isocyanatgruppe enthält.

7. Zusammensetzung nach Anspruch 2, dadurch gekennzeichnet, daß die Komponente b) des Acrylatcopolymerisats ein Hydroxylgruppen enthaltendes Monomer ist und die Verbindung (1) ein Alkoxymethylgruppen enthaltendes Amid einer α,β-ungesättigten Carbonsäure ist oder die Verbindung (1) der allgemeinen Formel 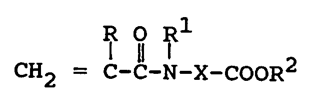 entspricht,
mit
R = H, CH₃
R¹ = H, Alkyl, Aryl
R² = Alkyl

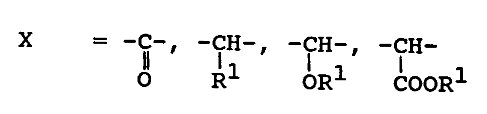

8. Zusammensetzung nach Anspruch 2, dadurch gekennzeichnet, daß das Monomer b) eine Epoxidgruppe enthält und die Verbindung (1) eine Carboxyl- oder Aminogruppe aufweist.

9. Zusammensetzung nach Anspruch 2, dadurch gekennzeichnet, daß die Komponente b) eine Esterfunktion enthält, wobei der Veresterungsalkohol nicht mehr als 6 Kohlenstoffatome enthält, und die Verbindung (1) außer der Gruppe (I) eine OH-, NH- oder SH-Gruppe enthält.

10. Zusammensetzung nach Anspruch 2, dadurch gekennzeichnet, daß die Monomeren b) Isocyanatgruppen enthalten und die Verbindung (1) außer der Gruppe (I) OH-, NH-, SH- oder COOH-Gruppen aufweist.

11. Zusammensetzung nach Anspruch 2, dadurch gekennzeichnet, daß b) ein Alkoxymethylgruppen enthaltendes Amid einer α,β-ungesättigten Carbonsäure oder eine Verbindung der allgemeinen Formel 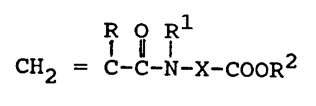 mit
R = H, CH₃
R¹ = H, Alkyl, Aryl
R² = Alkyl 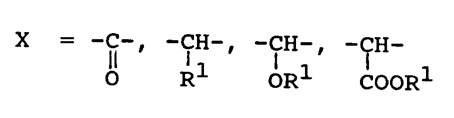
ist und die Verbindung (1) außer der Gruppe (I) OH-, NH-, SH- oder COOH-Gruppen aufweist.

12. Zusammensetzung nach Anspruch 3, dadurch gekennzeichnet, daß die Monomerkomponente b) ein Hydroxylgruppen enthaltendes Monomer ist und die Verbindung (2) neben der Gruppe (II) durchschnittlich 0,8 bis 1,5, vorzugsweise 1, freie Isocyanatgruppe aufweist.

13. Zusammensetzung nach Anspruch 3, dadurch gekennzeichnet, daß b) Monomere mit Glycidylgruppen sind und (2) neben der Gruppe (II) eine NH-Gruppe enthält.

14. Zusammensetzung nach Anspruch 3, dadurch gekennzeichnet, daß die Monomerkomponente b) eine Carboxylgruppe enthält und die Verbindung (2) ein Umsetzungsprodukt eines Polyepoxids mit n Mol Epoxygruppen und (n-1) Mol einer Verbindung mit NH-Gruppen und der Gruppe (II) ist.

15. Zusammensetzung nach Anspruch 3, dadurch gekennzeichnet, daß b) Monomere mit Isocyanatgruppen sind und (2) neben der Gruppe (II) OH- oder NH-Gruppen enthält.

16. Verwendung der härtbaren Zusammensetzung nach einem der Ansprüche 1 bis 15 für die Autoreparaturlackierung.

17. Verwendung der härtbaren Zusammensetzung nach einem der Ansprüche 1 bis 15 als Klarlack, Füller oder Decklack.

18. Verwendung der härtbaren Zusammensetzung nach einem der Ansprüche 1 bis 15 als Metallpigmente enthaltender Basislack und/oder als Klarlack einer Metallic-Lackierung.

19. Verfahren zur Herstellung einer härtbaren Zusammensetzung, die
A) Verbindungen, die mindestens zwei aktivierte Doppelbindungen (I) auf der Basis α,β-ungesättigter Carbonylverbindungen, α,β-ungesättigter Carbonsäureester oder α,β-ungesättigter Nitrilgruppen enthalten und als Michael-Akzeptor dienen können,
B) Verbindungen, die entweder mindestens eine primäre Aminogruppe (II), welche mit einem Aldehyd oder Keton mit nicht mehr als 10 C-Atomen blockiert ist oder mindestens 2 Gruppen, die zu NH-Gruppen hydrolysierbar sind, enthalten und als Michael-Donator dienen können und
C) übliche Zusatzstoffe, ggf. Katalysatoren, ggf. Pigmente und organische Lösungsmittel
enthält, dadurch gekennzeichnet, daß zunächst das lösliche verzweigte Acrylatcopolymerisat P hergestellt wird durch Copolymerisation von
a) 5 bis 30 Gew.-% Monomeren mit mindestens zwei ethylenisch ungesättigten polymerisierbaren Doppelbindungen,
b) 5 bis 60 Gew.-% Monomeren mit einer funktionellen Gruppe und
c) 5 bis 90 Gew.-% weiteren ethylenisch ungesättigten Monomeren,
wobei die Summe von a), b) und c) 100 Gew.-% beträgt, in einem organischen Lösungsmittel bei 70 bis 130°C, vorzugsweise bei 90 bis 120°C, unter Verwendung von mindestens 0,5 Gew.-%, vorzugsweise mindestens 2,5 Gew.-%, bezogen auf das Gesamtgewicht der Monomeren a), b) und c), eines Polymerisationsreglers und unter Verwendung von Polymerisationsinitiatoren, wobei ein vorvernetzes, nicht geliertes Produkt erhalten wird, und anschließend
das lösliche verzweigte Acrylatcopolymerisat P unter Bildung von A) mit einer Verbindung (1) umgesetzt wird, die neben einer mit dem Acrylatcopolymerisat P reaktionsfähigen Gruppe mindestens eine aktivierte Doppelbindung (I) enthält, und/oder
das verzweigte lösliche Acrylatcopolymerisat P unter Bildung von B) mit einer Verbindung (2) umgesetzt wird, die außer einer mit dem Acrylatcopolymerisat P reaktionsfähigen Gruppe mindestens eine primäre Aminogruppe (II) enthält, welche mit einem Aldehyd oder Keton mit nicht mehr als 10 C-Atomen blockiert ist, und A) oder B), bevorzugt A) in organischem Lösungsmittel ggf. mit Pigmenten und üblichen Zusatzstoffen durch Mischen und ggf. Dispergieren zu einer härtbaren Zusammensetzung verarbeitet werden und kurz vor der Anwendung die andere Komponente (B) bzw. A)) ggf. zusammen mit Katalysatoren zugefügt wird.

20. Verfahren nach Anspruch 19, dadurch gekennzeichnet, daß die Komponente b) des Acrylatcopolymerisats ein Hydroxylgruppen enthaltendes Monomer und die Verbindung (1) ein Monoester einer α,β-ungesättigten Carbonsäure ist.

21. Verfahren nach Anspruch 19, dadurch gekennzeichnet, daß die Komponente b) des Acrylatcopolymerisats ein Hydroxylgruppen enthaltendes Monomer ist und die Verbindung (1) eine α,β-ungesättigte Carbonsäure ist.

22. Verfahren nach Anspruch 19, dadurch gekennzeichnet, daß die Komponente b) des Acrylatcopolymerisats ein Hydroxylgruppen enthaltendes Monomer ist und die Verbindung (1) außer der Gruppe (I) eine Isocyanatgruppe enthält.

23. Verfahren nach Anspruch 19, dadurch gekennzeichnet, daß die Komponente b) des Acrylatcopolymerisats ein Hydroxylgruppen enthaltendes Monomer ist und die Verbindung (1) ein Alkoxymethylgruppen enthaltendes Amid einer α,β-ungesättigten Carbonsäure ist oder die Verbindung (1) der allgemeinen Formel 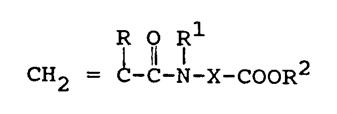 entspricht,
mit
R = H, CH₃
R¹ = H, Alkyl, Aryl
R² = Alkyl

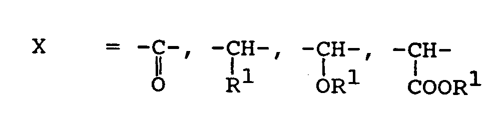

24. Verfahren nach Anspruch 19, dadurch gekennzeichnet, daß das Monomer b) eine Epoxidgruppe enthält und die Verbindung (1) eine Carboxyl- oder Aminogruppe aufweist.

25. Verfahren nach Anspruch 19, dadurch gekennzeichnet, daß die Komponente b) eine Esterfunktion enthält, wobei der Veresterungsalkohol nicht mehr als 6 Kohlenstoffatome enthält, und die Verbindung (1) außer der Gruppe (I) eine OH-, NH- oder SH-Gruppe enthält.

26. Verfahren nach Anspruch 19, dadurch gekennzeichnet, daß die Monomeren b) Isocyanatgruppen enthalten und die Verbindung (1) außer der Gruppe (I) OH-, NH-, SH- oder COOH-Gruppen aufweist.

27. Verfahren nach Anspruch 19, dadurch gekennzeichnet, daß b) ein Alkoxymethylgruppen enthaltendes Amid einer α,β-ungesättigten Carbonsäure oder eine Verbindung der allgemeinen Formel 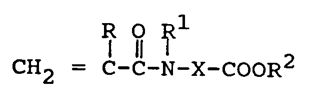 mit
R = H, CH₃
R¹ = H, Alkyl, Aryl
R² = Alkyl 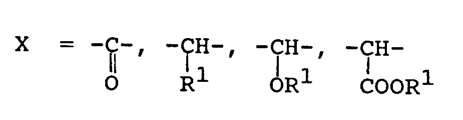
ist und die Verbindung (1) außer der Gruppe (I) OH-, NH-, SH- oder COOH-Gruppen aufweist.

28. Verfahren nach Anspruch 19, dadurch gekennzeichnet, daß die Monomerkomponente b) ein Hydroxylgruppen enthaltendes Monomer ist und die Verbindung (2) neben der Gruppe (II) durchschnittlich 0,8 bis 1,5, vorzugsweise 1, freie Isocyanatgruppe aufweist.

29. Verfahren nach Anspruch 19, dadurch gekennzeichnet, daß b) Monomere mit Glycidylgruppen sind und (2) neben der Gruppe (II) eine NH-Gruppe enthält.

30. Verfahren nach Anspruch 19, dadurch gekennzeichnet, daß die Monomerkomponente b) eine Carboxylgruppe enthält und die Verbindung (2) ein Umsetzungsprodukt eines Polyepoxids mit n Mol Epoxygruppen und (n-1) Mol einer Verbindung mit NH-Gruppen und der Gruppe (II) ist.

31. Verfahren nach Anspruch 19, dadurch gekennzeichnet, daß b) Monomere mit Isocyanatgruppen sind und (2) neben der Gruppe (II) OH- oder NH-Gruppen enthält.

32. Verfahren nach Anspruch 20, dadurch gekennzeichnet, daß die Verbindung (1) Ester α,β-ethylenisch ungesättigter Carbonsäuren sind, deren Alkoholkomponente bis zu 6 Kohlenstoffatome aufweisen.

33. Verfahren nach Anspruch 22, dadurch gekennzeichnet, daß die Verbindung (1) ein Isocyanatoalkylester ungesättigter Carbonsäuren der allgemeinen Formel 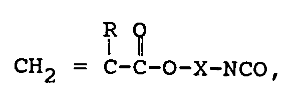 wobei
R = H, CH₃, C₂H₅
und
X = (CH₂)ₙ mit n = 1-12
bedeuten oder daß die Verbindung (1) m-isopropenyl-α,α-dimethylbenzylisocyanat ist oder ausgewählt ist aus der Gruppe der Umsetzungsprodukte von Diisocyanaten mit OH-, NH-, SH- oder COOH-funktionellen Derivaten der Acrylsäure, Methacrylsäure, Fumarsäure, Maleinsäure, Crotonsäure und Dimethylacrylsäure.

34. Verfahren nach Anspruch 23, dadurch gekennzeichnet, daß die Verbindung (1) ausgewählt ist aus der Gruppe Methoxymethylacrylamid, Methoxymethylmethacrylamid, Butoxymethylacrylamid, Butoxymethylmethacrylamid, Isobutoxymethylacrylamid, Isobutoxymethylmethacrylamid, analoge Amide der Fumarsäure, Crotonsäure und der Dimethylacrylsäure, Glykolsäurederivate, wie Methylacrylamidoglykolatmethylether, Butylacrylamidoglykolatbutylether, Methylacrylamidoglykolat, Butylacrylamidoglykolat.

## Claims

1. Hardenable composition containing
A) compounds which contain at least two activated double bonds (I) based on α,β-unsaturated carbonyl compounds, α,β-unsaturated carboxylic acid esters or α,β-unsaturated nitrile groups, and which can be used as a Michael acceptor,
B) compounds which contain either at least one primary amino group (II) which is blocked by an aldehyde or ketone having not more than 10 C atoms or at least 2 groups which can be hydrolysed to NH groups, and which can be used as a Michael donor and
C) customary additives, if appropriate catalysts, if appropriate pigments and organic solvents,
characterised in that either component A or component B or components A and B are based on a branched acrylate copolymer P soluble in organic solvent which is obtainable by copolymerisation of
a) 5 to 30% by weight of monomers having at least two ethylenically unsaturated polymerisable double bonds,
b) 5 to 60% by weight of monomers having a functional group and
c) 5 to 90% by weight of other ethylenically unsaturated monomers,
the sum of a), b) and c) being 100% by weight.

2. Composition according to Claim 1, characterised in that component A) is obtainable by reaction of the branched soluble acrylate copolymer P with a compound (1) containing at least one activated double bond (1).

3. Composition according to Claim 1, characterised in that component B) is obtainable by reaction of the branched soluble acrylate copolymer P with a compound (2) which, in addition to a group which reacts with the acrylate copolymer, contains at least one primary amino group (II) blocked by an aldehyde or ketone having not more than 10 C atoms.

4. Composition according to Claim 2 characterised in that component b) of the acrylate copolymer is a monomer containing hydroxyl groups and compound (1) is a monoester of an α,β-unsaturated carboxylic acid.

5. Composition according to Claim 2, characterised in that component b) of the acrylate copolymer is a monomer containing hydroxyl groups and the compound (1) is an α,β-unsaturated carboxylic acid.

6. Composition according to Claim 2, characterised in that component b) of the acrylate copolymer is a monomer containing hydroxyl groups and the compound (1) contains, in addition to the group (I), an isocyanate group.

7. Composition according to Claim 2, characterised in that component b) of the acrylate copolymer is a monomer containing hydroxyl groups and the compound (1) is an amide, containing alkoxymethyl groups, of an α,β-unsaturated carboxylic acid, or the compound (1) corresponds to the general formula 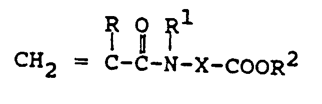 where
R = H or CH₃,
R¹ = H, alkyl or aryl,
R² = alkyl and

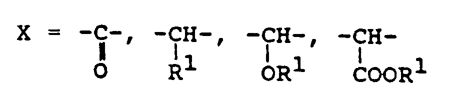

8. Composition according to Claim 2, characterised in that monomer b) contains an epoxide group and the compound (1) contains a carboxyl or amino group.

9. Composition according to Claim 2, characterised in that component b) contains an ester function, the esterifying alcohol containing not more than 6 carbon atoms, and the compound (1) contains, in addition to the group (I), an OH, NH or SH group.

10. Composition according to Claim 2, characterised in that the monomers b) contain isocyanate groups and the compound (1) contains, in addition to the group (I), OH, NH, SH or COOH groups.

11. Composition according to Claim 2, characterised in that b) is an amide, containing alkoxymethyl groups, of an α,β-unsaturated carboxylic acid or a compound of the general formula 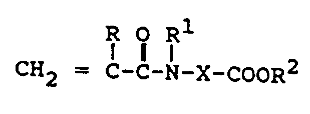 where
R = H or CH₃,
R¹ = H, alkyl or aryl,
R² = alkyl and 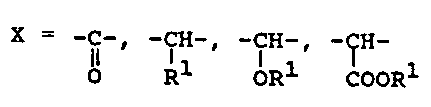
and the compound (1) contains, in addition to the group (I), OH, NH, SH or COOH groups.

12. Composition according to Claim 3, characterised in that the monomer component b) is a monomer containing hydroxyl groups and the compound (2) contains, in addition to the group (II), on average 0.8 to 1.5, preferably 1, free isocyanate group.

13. Composition according to Claim 3, characterised in that b) are monomers having glycidyl groups and (2) contains, in addition to the group (II), an NH group.

14. Composition according to Claim 3, characterised in that the monomer component b) contains a carboxyl group and the compound (2) is a reaction product of a polyepoxide having n mole of epoxy groups and (n-1) mole of a compound having NH groups and the group (II).

15. Composition according to Claim 3, characterised in that b) are monomers having isocyanate groups and (2) contains, in addition to the group (II), OH or NH groups.

16. Use of a hardenable composition according to any one of Claims 1 to 15 for automobile repair lacquering.

17. Use of a hardenable composition according to any one of Claims 1 to 15 as a clear lacquer, filler or top lacquer.

18. Use of a hardenable composition according to any one of Claims 1 to 15 as a base lacquer containing metallic pigments and or as a clear lacquer of a metallic lacquering.

19. Process for the preparation of a hardenable composition containing
A) compounds which contain at least two activated double bonds (I) based on α,β-unsaturated carbonyl compounds, α,β-unsaturated carboxylic acid esters or α,β-unsaturated nitrile groups and which can be used as a Michael acceptor,
B) compounds which contain either at least one primary amino group (II) which is blocked by an aldehyde or ketone having not more than 10 C atoms or at least 2 groups which can be hydrolysed to NH groups, and which can be used as a Michael donor and
C) customary additives, if appropriate catalysts, if appropriate pigments and organic solvents,
characterised in that the soluble branched acrylate copolymer P is first prepared by copolymerisation of
a) 5 to 30% by weight of monomers having at least two ethylenically unsaturated polymerisable double bonds,
b) 5 to 60% by weight of monomers having a functional group and
c) 5 to 90% by weight of other ethylenically unsaturated monomers,
the sum of a), b) and c) being 100% by weight, in an organic solvent at 70 to 130°C, preferably at 90 to 120°C, using at least 0.5% by weight, preferably at least 2.5% by weight, based on the total weight of monomers a), b) and c), of a polymerisation regulator and using polymerisation initiators, a pre-crosslinked, non-gelled product being obtained, and the soluble branched acrylate copolymer P is subsequently reacted with a compound (1) which, in addition to a group which can react with the acrylate copolymer P, contains at least one activated double bond (I), A) being formed, and/or the branched soluble acrylate copolymer P is reacted with a compound (2) which, in addition to a group which reacts with the acrylate copolymer P, contains at least one primary amino group (II) which is blocked by an aldehyde or ketone having not more than 10 C atoms, B) being formed, and A) or B), preferably A), are (sic) processed in an organic solvent, if appropriate with pigments and customary additives, by mixing and if appropriate dispersing, to give a hardenable composition, and shortly before use, and the other component (B) or (A), is added, if appropriate together with a catalyst.

20. Process according to Claim 19, characterised in that component b) of the acrylate copolymer is a monomer containing hydroxyl groups and the compound (1) is a monoester of an α,β-unsaturated carboxylic acid.

21. Process according to Claim 19, characterised in that component b) of the acrylate copolymer is a monomer containing hydroxyl groups and the compound (1) is an α,β-unsaturated carboxylic acid.

22. Process according to Claim 19, characterised in that component b) of the acrylate copolymer is a monomer containing hydroxyl groups and the compound (1) contains, in addition to the group (I), an isocyanate group.

23. Process according to Claim 19, characterised in that component b) of the acrylate copolymer is a monomer containing hydroxyl groups and the compound (1) is an amide, containing alkoxymethyl groups and the compound (1) is an amide, containing alkoxymethyl groups, of an α,β-unsaturated carboxylic acid, or the compound (1) corresponds to the general formula 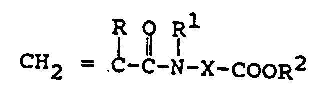 where
R = H or CH₃,
R¹ = H, alkyl or aryl,
R² = alkyl and

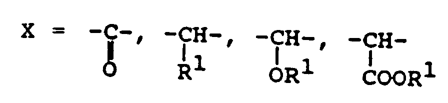

24. Process according to Claim 19, characterised in that monomer b) contains an epoxide group and the compound (1) contains a carboxyl or amino group.

25. Process according to Claim 19, characterised in that component (b) contains an ester function, the esterifying alcohol containing not more than 6 carbon atoms, and the compound (1) contains, in addition to the group (I), an OH, NH or SH group.

26. Process according to Claim 19, characterised in that the monomers b) contain isocyanate groups and the compound (1) contains, in addition to the group (I), OH, NH, SH or COOH groups.

27. Process according to Claim 19, characterised in that b) is an amide, containing alkoxymethyl groups, of an α,β-unsaturated carboxylic acid, or a compound of the general formula 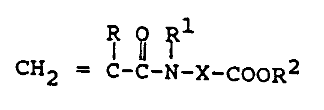 where
R = H or CH₃,
R¹ = H, alkyl or aryl,
R² = alkyl and 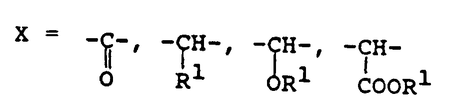
and the compound (1) contains, in addition to the group (I), OH, NH, SH or COOH groups.

28. Process according to Claim 19, characterised in that the monomer component b) is a monomer containing hydroxyl groups and the compound (2) contains, in addition to the group (II), on average 0.8 to 1.5, preferably 1, free isocyanate group.

29. Process according to Claim 19, characterised in that b) are monomers having glycidyl groups and (2) contains, in addition to the group (II), an NH group.

30. Process according to Claim 19, characterised in that the monomer component b) contains a carboxyl group and the compound (2) is a reaction product of a polyepoxide having n mole of epoxy groups and (n-1) mole of a compound having NH groups and the group (II).

31. Process according to Claim 19, characterised in that b) are monomers having isocyanate groups and (2) contains, in addition to the group (II), OH or NH groups.

32. Process according to Claim 20, characterised in that the compound (sic) (1) are esters of α,β-ethylenically unsaturated carboxylic acids, the alcohol components of which contain up to 6 carbon atoms.

33. Process according to Claim 22, characterised in that the compound (1) is an isocyanatoalkyl ester of unsaturated carboxylic acids, of the general formula 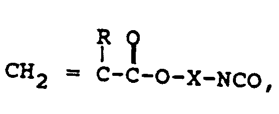 wherein
R = H, CH₃ or C₂H₅
and
X = (CH₂)ₙ, where n = 1-12,
or the compound (1) is m-isopropenyl-α,α-dimethylbenzyl isocyanate or is chosen from the group comprising reaction products of diisocyanates with OH-, NH-, SH- or COOH-functional derivatives of acrylic acid, methacrylic acid, fumaric acid, maleic acid, crotonic acid and dimethylacrylic acid.

34. Process according to Claim 23, characterised in that the compound (1) is chosen from the group comprising methoxymethylacrylamide, methoxymethylmethacrylamide, butoxymethylacrylamide, butoxymethylmethacrylamide, isobutoxymethylacrylamide, isobutoxymethylmethacrylamide, analogous amides of fumaric acid, crotonic acid and dimethylacrylic acid and glycolic acid derivatives, such as methacrylamidoglycolate methyl ether, butylacrylamidoglycolate butyl ether, methylacrylamidoglycolate and butylacrylamidoglycolate.

## Revendications

1. Composition durcissable, contenant :
(A) des composés, qui renferment au moins deux doubles liaisons activées (I), à base de composés carbonylés à insaturation α,β, d'esters d'acides carboxyliques à insaturation α,β ou de groupes nitriles à insaturation α,β, et qui peuvent servir d'accepteur de Michael ;
(B) des composés, qui contiennent, ou bien au moins un groupe amino primaire (II), lequel est bloqué par un aldéhyde ou une cétone ne présentant pas plus de 10 atomes de carbone, ou bien au moins 2 groupes qui sont hydrolysables en groupes NH, et qui peuvent servir de donneur de Michael ; et
(C) des additifs usuels, le cas échéant des catalyseurs, le cas échéant des pigments et des solvants organiques,
caractérisée par le fait qu'ou bien le composant (A), ou bien le composant (B), ou bien les composants (A) et (B) sont à base d'un copolymère d'acrylate (P), ramifié, soluble dans les solvants organiques, lequel peut être obtenu par copolymérisation de :
(a) 5 à 30% en poids de monomères ayant au moins deux doubles liaisons d'insaturation éthylénique, polymérisables ;
(b) 5 à 60% en poids de monomères ayant un groupe fonctionnel; et
(c) 5 à 90% en poids d'autres monomères à insaturation éthylénique ;
la somme de (a), (b) et (c) s'élevant à 100% en poids.

2. Composition selon la revendication 1, caractérisée par le fait que le composant (A) peut être obtenu par réaction du copolymère d'acrylate (P), ramifié, soluble, avec un composé (1), qui contient au moins une double liaison activée (I).

3. Composition selon la revendication 1, caractérisée par le fait que le composant (B) peut être obtenu par réaction du copolymère d'acrylate (P), ramifié, soluble, avec un composé (2), qui contient, en dehors d'un groupe capable de réagir avec le copolymère d'acrylate, au moins un groupe amino primaire (II), lequel est bloqué par un aldéhyde ou une cétone ne comportant pas plus de 10 atomes de carbone.

4. Composition selon la revendication 2, caractérisée par le fait que le composant (b) du copolymère d'acrylate est un monomère contenant des groupes hydroxyle, et le composé (1) est un monoester d'un acide carboxylique à insaturation α,β.

5. Composition selon la revendication 2, caractérisée par le fait que le composant (b) du copolymère d'acrylate est un monomère contenant des groupes hydroxyle, et le composé (1) est un acide carboxylique à insaturation α,β.

6. Composition selon la revendication 2, caractérisée par le fait que le composant (b) du copolymère d'acrylate est un monomère contenant des groupes hydroxyle, et le composé (1) contient, en dehors du groupe (I), un groupe isocyanate.

7. Composition selon la revendication 2, caractérisée par le fait que le composant (b) du copolymère d'acrylate est un monomère contenant des groupes hydroxyle, et le composé (1) est un amide contenant des groupes alcoxyméthyle d'un acide carboxylique à insaturation α,β, ou bien le composé (1) correspond à la formule générale : 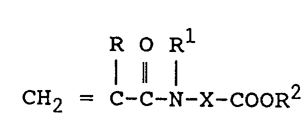 avec :
- R = H, CH₃ ;
- R¹ = H, alkyle, aryle ;
- R² = alkyle ;

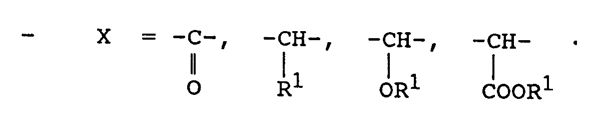

8. Composition selon la revendication 2, caractérisée par le fait que le monomère (b) contient un groupe époxy, et le composé (1) présente un groupe carboxyle ou amino.

9. Composition selon la revendication 2, caractérisée par le fait que le composant (b) contient une fonction ester, l'alcool d'estérification ne contenant pas plus de 6 atomes de carbone, et le composé (1) contient, en dehors du groupe (I), un groupe OH, NH ou SH.

10. Composition selon la revendication 2, caractérisée par le fait que les monomères (b) contiennent des groupes isocyanate, et le composé (1) présente, en dehors du groupe (I), des groupes OH, NH, SH ou COOH.

11. Composition selon la revendication 2, caractérisée par le fait que (b) est un amide contenant des groupes alcoxyméthyle d'un acide carboxylique à insaturation α,β ou un composé de la formule générale : 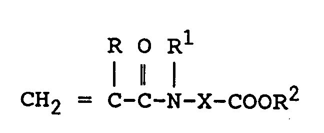 avec :
- R = H, CH₃ ;
- R¹ = H, alkyle, aryle ;
- R² = alkyle ; 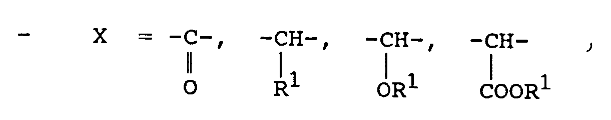
et le composé (1) présente, en dehors du groupe (I), des groupes OH, NH, SH ou COOH.

12. Composition selon la revendication 3, caractérisée par le fait que le composant monomère (b) est un monomère contenant des groupes hydroxyle, et le composé (2) présente, en dehors du groupe (II), en moyenne 0,8 à 1,5, de préférence,1, groupe isocyanate libre.

13. Composition selon la revendication 3, caractérisée par le fait que les monomères (b) sont des monomères présentant des groupes glycidyle, et (2) contient, en dehors du groupe (II), un groupe NH.

14. Composition selon la revendication 3, caractérisée par le fait que le composant monomère (b) contient un groupe carboxyle, et le composé (2) est un produit de réaction d'un polyépoxyde avec n moles de groupes époxy et (n-1) moles d'un composé présentant des groupes NH et le groupe (II).

15. Composition selon la revendication 3, caractérisée par le fait que les monomères (b) sont des monomères contenant des groupes isocyanate et le composé (2) contient, en dehors du groupe (II), des groupes OH ou NH.

16. Utilisation de la composition durcissable telle que définie à l'une des revendications 1 à 15, pour le laquage de réparation des automobiles.

17. Utilisation de la composition durcissable telle que définie à l'une des revendications 1 à 15, comme laque transparente, mastic bouche-pores ou laque de recouvrement.

18. Utilisation de la composition durcissable telle que définie à l'une des revendications 1 à 15, comme laque de base renfermant des pigments métalliques et/ou comme laque transparente d'un laquage métallique.

19. Procédé de fabrication d'une composition durcissable, qui contient :
(A) des composés, qui renferment au moins deux doubles liaisons activées (I), à base de composés carbonylés à insaturation α,β, d'esters d'acides carboxyliques à insaturation α,β, ou de groupes nitriles à insaturation α,β, et qui peuvent servir d'accepteur de Michael ;
(B) des composés, qui contiennent, ou bien au moins un groupe amino primaire (II), lequel est bloqué par un aldéhyde ou une cétone ne présentant pas plus de 10 atomes de carbone, ou bien au moins 2 groupes qui sont hydrolysables en groupes NH, et qui peuvent servir de donneur de Michael ; et
(C) des additifs usuels, le cas échéant des catalyseurs, le cas échéant des pigments et des solvants organiques,
caractérisé par le fait que l'on prépare tout d'abord le copolymère d'acrylate (P) ramifié, soluble, par copolymérisation de :
(a) 5 à 30% en poids de monomères ayant au moins deux doubles liaisons d'insaturation éthylénique, polymérisables ;
(b) 5 à 60% en poids de monomères ayant un groupe fonctionnel ; et
(c) 5 à 90% en poids d'autres monomères à insaturation éthylénique ;
la somme de (a), (b) et (c) s'élevant à 100% en poids,
dans un solvant organique, à une température de 70 à 130°C, de préférence, à une température de 90 à 120°C, avec utilisation d'au moins 0,5% en poids, de façon préférée, d'au moins 2,5% en poids, par rapport au poids total des monomères (a), (b) et (c), d'un régulateur de polymérisation, et avec utilisation d'initiateurs de polymérisation, où l'on obtient un produit non gélifié, préréticulé, puis que l'on fait réagir le polymère d'acrylate (P), ramifié, soluble, avec formation de (A), avec un composé (1) qui contient, en dehors d'un groupe capable de réagir avec le copolymère d'acrylate (P), au moins une double liaison activée (I), et/ou que l'on fait réagir le copolymère d'acrylate (P) soluble, ramifié, avec formation de (B), avec un composé (2) qui contient, en dehors d'un groupe capable de réagir avec le copolymère d'acrylate (P), au moins un groupe amino primaire (II), lequel est bloqué par un aldéhyde ou une cétone ne comportant pas plus de 10 atomes de carbone, et l'on transforme (A) ou (B), de préférence (A), dans un solvant organique, le cas échéant avec des pigments et des additifs usuels, par mélange, et le cas échéant, dispersion, en une composition durcissable, et, peu de temps avant l'application, on ajoute l'autre composant ((B) ou (A)), le cas échéant conjointement avec des catalyseurs.

20. Procédé selon la revendication 19, caractérisé par le fait que le composant (b) du copolymère d'acrylate est un monomère contenant des groupes hydroxyle, et le composé (1) est un monoester d'un acide carboxylique à insaturation α,β.

21. Procédé selon la revendication 19, caractérisé par le fait que le composant (b) du copolymère d'acrylate est un monomère contenant des groupes hydroxyle, et le composé (1) est un acide carboxylique à insaturation α,β.

22. Procédé selon la revendication 19, caractérisé par le fait que le composant (b) du copolymère d'acrylate est un monomère contenant des groupes hydroxyle, et le composé (1) contient, en dehors du groupe (I), un groupe isocyanate.

23. Procédé selon la revendication 19, caractérisé par le fait que le composant (b) du copolymère d'acrylate est un monomère contenant des groupes hydroxyle, et le composé (1) est un amide contenant des groupes alcoxyméthyle d'un acide carboxylique à insaturation α,β, ou bien le composé (1) correspond à la formule générale : 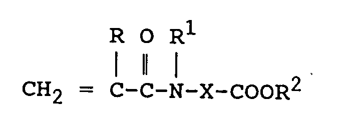 avec :
- R = H, CH₃ ;
- R¹ = H, alkyle, aryle ;
- R² = alkyle ;

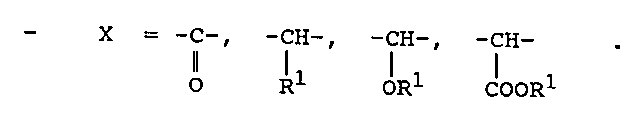

24. Procédé selon la revendication 19, caractérisé par le fait que le monomère (b) contient un groupe époxy, et le composé (1) présente un groupe carboxyle ou amino.

25. Procédé selon la revendication 19, caractérisé par le fait que le composant (b) contient une fonction ester, l'alcool d'estérification ne contenant pas plus de 6 atomes de carbone, et le composé (1) contient, en dehors du groupe (I), un groupe OH, NH ou SH.

26. Procédé selon la revendication 19, caractérisé par le fait que les monomères (b) contiennent des groupes isocyanate, et le composé (1) présente, en dehors du groupe (I), des groupes OH, NH, SH ou COOH.

27. Procédé selon la revendication 19, caractérisé par le fait que (b) est un amide contenant des groupes alcoxyméthyle d'un acide carboxylique à insaturation α,β ou un composé de la formule générale : 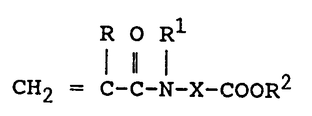 avec :
- R = H, CH₃ ;
- R¹ = H, alkyle, aryle ;
- R² = alkyle ; 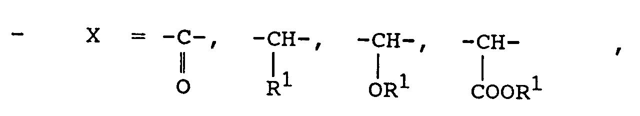
et le composé (1) contient, en dehors du groupe (I), des groupes OH, NH, SH ou COOH.

28. Procédé selon la revendication 19, caractérisé par le fait que le composant monomère (b) est un monomère contenant des groupes hydroxyle et le composé (2) présente, en dehors du groupe (II), en moyenne 0,8 à 1,5, de préférence,1, groupe isocyanate libre.

29. Procédé selon la revendication 19, caractérisé par le fait que les monomères (b) sont des monomères présentant des groupes glycidyle, et (2) contient, en dehors du groups (II), un groupe NH.

30. Procédé selon la revendication 19, caractérisé par le fait que le composant monomère (b) contient un groupe carboxyle, et le composé (2) est un produit de réaction d'un polyépoxyde avec n moles de groupes époxy et (n-1) moles d'un composé présentant des groupes NH et le groupe (II).

31. Procédé selon la revendication 19, caractérisé par le fait que les monomères (b) sont des monomères contenant des groupes isocyanate, et le composé (2) contient, en dehors du groupe (II), des groupes OH ou NH.

32. Procédé selon la revendication 20, caractérisé par le fait que le composé (1) est choisi parmi des esters d'acides carboxyliques à insaturation α,β, dont les composants alcools contiennent jusqu'à 6 atomes de carbone.

33. Procédé selon la revendication 22, caractérisé par le fait que le composé (1) est un ester isocyanatoalkylique d'acides carboxyliques insaturés de la formule générale : 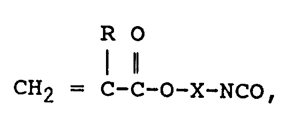 où :
- R = H, CH₃, C₂H₅ ; et
- X = (CH₂)ₙ avec n = 1-12
ou que le composé (1) est l'isocyanate de m-isopropényl-α,α-diméthylbenzyle, ou est choisi dans le groupe des produits de réaction de diisocyanates avec des dérivés à fonctionnalité OH, NH, SH ou COOH de l'acide acrylique, de l'acide méthacrylique, de l'acide fumarique, de l'acide maléique, de l'acide crotonique et de l'acide diméthylacrylique.

34. Procédé selon la revendication 23, caractérisé par le fait que le composé (1) est choisi dans le groupe constitué par le méthoxyméthylacrylamide, le méthoxyméthylméthacrylamide, le butoxyméthylacrylamide, le butoxyméthylméthacrylamide, l'isobutoxyméthylacrylamide, l'isobutoxyméthylméthacrylamide, les amides analogues de l'acide fumarique, de l'acide crotonique et de l'acide diméthylacrylique, les dérivés d'acide glycolique, comme l'éther méthylique du méthylacrylamidoglycolate, l'éther butylique du butylacrylamidoglycolate, le méthylacrylamidoglycolate, le butylacrylamidoglycolate.
